(19) Europäisches Patentamt
European Patent Office
Office européen des brevets

(11) Veröffentlichungsnummer: **0 281 980 B1**

(12) **EUROPÄISCHE PATENTSCHRIFT**

(45) Veröffentlichungstag der Patentschrift: **18.09.91**

(51) Int. Cl.$^5$: **C07F 9/30**, C07F 9/42

(21) Anmeldenummer: **88103460.7**

(22) Anmeldetag: **05.03.88**

Die Akte enthält technische Angaben, die nach dem Eingang der Anmeldung eingereicht wurden und die nicht in dieser Patentschrift enthalten sind.

# (54) Verfahren zur Herstellung von Aminocarbonylmethansäuren des Phosphors.

(30) Priorität: **10.03.87 DE 3707638**

(43) Veröffentlichungstag der Anmeldung:
**14.09.88 Patentblatt 88/37**

(45) Bekanntmachung des Hinweises auf die Patenterteilung:
**18.09.91 Patentblatt 91/38**

(84) Benannte Vertragsstaaten:
**BE CH DE FR GB IT LI NL**

(56) Entgegenhaltungen:
**EP-A- 0 184 753**
**EP-A- 0 242 706**
**AT-B- 249 081**

(73) Patentinhaber: **HOECHST AKTIENGESELLSCHAFT**
**Postfach 80 03 20**
**W-6230 Frankfurt am Main 80(DE)**

(72) Erfinder: **Kleiner, Hans-Jerg, Dr.**
**Altkönigstrasse 11a**
**W-6242 Kronberg/Taunus(DE)**

EP 0 281 980 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein Verfahren zur Herstellung von Aminocarbonylmethansäuren des Phosphors.

Aminocarbonylmethanphosphonsäure und Alkyl-aminocarbonylmethylphosphinsäuren sind wertvolle Zwischenprodukte zur Herstellung von Aminomethanphosphonsäure und Alkyl-aminomethylphosphinsäuren (siehe EP-OS 0184753 und EP-OS 242 706). Insbesondere Aminocarbonylmethanphosphonsäure ist bisher nicht einfach zugänglich gewesen. Zu ihrer Herstellung ist bisher nur die Hydrolyse der Aminocarbonylmethanphosphonsäurebis(tri-methylsilyl)ester beschrieben worden (siehe EP-OS 242 706). Weitere Verfahren zu ihrer Herstellung sind daher sehr erwünscht.

Es wurde nun überraschend gefunden, daß man Aminocarbonylmethanphosphonsäure und Alkyl-aminocarbonylmethylphosphinsäuren der allgemeinen Formel I (s. Patentanspruch 1), worin $R^1$ OH oder $C_1$-$C_3$-Alkyl bedeutet, in einfacher und vorteilhafter Weise dadurch herstellen kann, daß man Cyanomethanphosphonsäuredihalogenid bzw. Alkylcyanomethylphosphinsäurehalogenid entsprechend der allgemeinen Formel II (s. Patentanspruch 1), worin $R^2$ ein Halben mit einem Atomgewicht von 35 - 80 oder $C_1$-$C_3$-Alkyl und Hal ein Halben mit einem Atomgewicht von 35 bis 80 bedeutet, mit mindestens der stöchiometrischen Menge Wasser umsetzt. Die Cyanogruppe wird bei diesem Verfahren also praktisch vollständig mithydrolysiert.

Die zum Einsatz gelangenden Säurehalogenide, insbesondere Cyanomethanphosphonsäuredichlorid und Cyanomethyl-methyPhosphinsäurechlorid, lassen sich nach dem Verfahren der Patentanmeldung 88 103 459.9 (EP-A-0281979) vom gleichen Tage erhalten. Zweckmäßig arbeitet man bei dem erfindungsgemäßen Verfahren bei Temperaturen von -30 bis +100 °C, vorzugsweise von -5 bis +50 °C.

Unter dem Begriff "stöchiometrische Menge" wird die Menge Wasser verstanden, die stöchiometrisch zur Hydrolyse der Halogenatome und der Cyanogruppe zur Amidgruppe erforderlich ist. Auf ein Mol Cyanomethanphosphonsäuredihalogenid werden also im allgemeinen mindestens 3 Mol, auf ein Mol Alkylcyanomethyl-phosphinsäurehalogenid im allgemeinen mindestens 2 Mol Wasser eingesetzt, gegebenenfalls in Form von wäßriger Halogenwasserstoffsäure wie Salzsäure verschiedener Konzentrationen, was das Arbeiten in den tieferen Temperaturbereichen erleichtert. Hierfür eignen sich außer Salzsäure auch wäßrige Lösungen der anderen Halogenwasserstoffe wie Brom- oder Fluorwasserstoff. Überschüsse an Wasser sind möglich, z.B. bis zum Zwei-oder Dreifachen der stöchiometrischen Menge.

Es ist auch die Zugabe von mit Wasser mischbaren, gegenüber den Reaktionsteilnehmern unter den Reaktionsbedingungen inerten Lösungsmitteln möglich, um zu gewährleisten, daß das System abgesaugt werden kann. Geeignet sind z.B. niedermolekulare aliphatische Carbonsäuren, wie Ameisensäure und Essigsäure, Ketone wie Aceton, Methyläthylketon und Methylisobutylketon. Die Verwendung von Alkoholen, wie Isopropanol oder Isobutanol zum Digerieren ist ebenfalls möglich.

Vorteilhaft ist es, das Wasser in das Säurehalogenid langsam einzudosieren, z.B. einzutropfen. Es kann jedoch auch in umgekehrter Reihenfolge verfahren werden. Zur Vervollständigung der Umsetzung ist ein längeres Nachrühren zweckmäßig. Die Alkylreste können Methyl, Äthyl, Propyl oder Isopropyl sein; Methyl ist bevorzugt. Die erfindungsgemäß hergestellten Säuren fallen in kristalliner Form an. Insbesondere die Phosphinsäuren halten jedoch den Halogenwasserstoff mehr oder weniger zurück. Sie sind also mit Halogenwasserstoff verunreinigt. Eine Entfernung des anhaftenden Halogenwasserstoffs ist z.B. durch Umkristallisation möglich. Weiterhin kann der Halogenwasserstoff durch Erhitzen unter vermindertem Druck entfernt werden.

Beispiele

1) In 54,5 g (o,35 Mol) Cyanomethanphosphonsäuredichlorid wurden unter Rühren bei anfangs 0-5 °C innerhalb 2 Stunden insgesamt 20 g (1,11 Mol) Wasser eingetropft. Nachdem die Hälfte zugetropft war, wurde das Reaktionsgut schwer rührbar; deshalb wurde ohne weitere Kühlung weiter eingetropft, bis die Temperatur auf ca. 30 °C gestiegen war. Gleichzeitig entwickelte sich als Abgas Chlorwasserstoff. Bei 30 °C wurde zu Ende eingetropft. Dann wurde längere Zeit nachgerührt, bis das Reaktionsgut durchkristallisiert war. Nun wurden 150 ml Eisessig zugegeben und lebhaft gerührt, dann abgesaugt. Man erhielt 43 g Aminocarbonylmethanphosphonsäure vom Fp. 176 °C. Aus dem Filtrat wurden durch Einengen weitere 2,5 g gewonnen. Die Reinheit betrug aufgrund eines $^{31}$P-NMR-Spektrums 99,3 %. Die Gesamtausbeute betrug demnach 94 % d. Th.

2) In 31,3 g (1,1 Mol, bezogen auf den Wassergehalt) konz. Salzsäure wurden bei 0 °C unter lebhaftem Kühlen 54,5 g (0,35 Mol) Cyanomethanphosphonsäuredichlorid während 2 Stunden eingetropft; dabei entstand Chlorwasserstoff als Abgas. Danach wurde zunächst bei 5 °C nachgerührt, dann bei Raumtemperatur, bis das Reaktionsgut kristallin war. Nun wurden 150 ml Eisessig zugegeben, lebhaft gerührt und dann abgesaugt. Man erhielt 41 g Aminocarbonylmethanphosphonsäure vom Fp. 174-175 °C. Aus dem Filtrat wurden weitere 2,5 g gewonnen. Die Gesamtausbeute betrug demnach 90 % d. Th.

3) In 32,4 g (1,14 Mol, bezogen auf den Wassergehalt) konz. Salzsäure wurden unter lebhaftem Rühren bei 0 - 5 °C 73,5 g (0,535 Mol) Cyanomethyl-methylphosphinsäurechlorid in 2,5 Stunden unter Entwicklung von Chlorwasserstoff eingetropft; dann wurde bei 5 °C, schließlich bei Raumtemperatur nachgerührt, bis das Reaktionsgut durchkristallisiert war. Nun wurde Isopropanol zugegeben, dann lebhaft gerührt und abgesaugt. Man erhielt 65 g rohe Aminocarbonylmethyl-methylphosphinsäure mit einem Chlorwasserstoffgehalt von 8,5 %. Aus dem Filtrat konnten weitere 10 g Rohprodukt gewonnen werden. Das gesamte Rohprodukt wurde bei 110 °C/0,067 kPa in einer Trockenpistole getrocknet. Man erhielt 64 g Aminocarbonylmethyl-methylphosphinsäure mit einem Chlorwasserstoffgehalt von 0,2 % und dem Fp 121-125 °C: nach Umkristallisation aus Isopropanol betrug der Fp. 127 °C. Die Ausbeute betrug demnach 87 % d.Th.

## Patentansprüche

1. Verfahren zur Herstellung von Aminocarbonylmethanphosphonsäure und Alkyl-aminocarbonylmethylphosphinsäure der allgemeinen Formel I

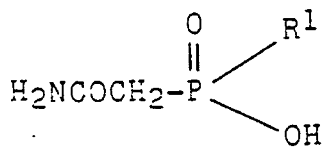

I

worin $R^1$ OH oder $C_1$-$C_3$-Alkyl bedeutet, dadurch gekennzeichnet, daß man Cyanomethanphosphonsäuredihalogenid bzw. Alkyl-cyanomethylphosphinsäurehalogenid entsprechend der allgemeinen Formel II

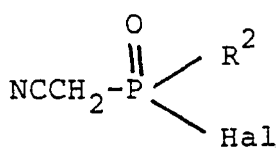

II

worin $R^2$ ein Halogen mit einem Atomgewicht von 35 bis 80 oder $C_1$-$C_3$-Alkyl und Hal ein Halogen mit einem Atomgewicht von 35 bis 80 bedeutet, mit mindestens der stöchiometrischen Menge Wasser umsetzt.

2. Verfahren nach Anspruch 1, dadurch gekennzeichnet, daß Hal Chlor bedeutet.

3. Verfahren nach Anspruch 2, dadurch gekennzeichnet, daß Cyanomethanphosphonsäuredichlorid oder Cyanomethyl-methylphosphinsäurechlorid als Ausgangsmaterial verwendet werden.

4. Verfahren nach einem oder mehreren der Ansprüche 1 bis 3, dadurch gekennzeichnet, daß man bei Temperaturen von -30 bis +100 °C, vorzugsweise von -5 bis +50 °C arbeitet.

5. Verfahren nach einem oder mehreren der Ansprüche 1 bis 4, dadurch gekennzeichnet, daß das Wasser in einem Überschuß bis zum Zweifachen der stöchiometrischen Menge verwendet wird.

6. Verfahren nach einem oder mehreren der Ansprüche 1 bis 5, dadurch gekennzeichnet, daß das Wasser in Form einer wäßrigen Halogenwasserstoffsäure, vorzugsweise Salzsäure, eingesetzt wird.

7. Verfahren nach einem oder mehreren der Ansprüche 1 bis 6, dadurch gekennzeichnet, daß dem Reaktionsgemisch noch wenigstens ein gegenüber den Reaktionsteilnehmern inertes, mit Wasser mischbares Lösungsmittel zugegeben wird.

8. Verfahren nach Anspruch 7, dadurch gekennzeichnet, daß das Lösungsmittel eine niedermolekulare aliphatische Carbonsäure, vorzugsweise Essigsäure, ist.

9. Verfahren nach einem oder mehreren der Ansprüche 1, 2 und 4 bis 8, dadurch gekennzeichnet, daß das Alkyl Methyl ist.

**Claims**

1. A process for the preparation of an aminocarbonyl-methanephosphonic acid and an alkylaminocarbonyl-methylphosphinic acid of the formula I

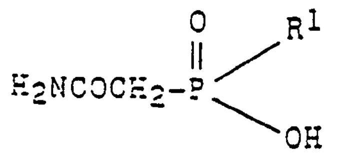

I

in which $R^1$ is OH or $C_1$-$C_3$-alkyl, which comprises reacting a cyanomethanephosphonyl dihalide or an alkylcyanomethylphosphinyl halide corresponding to the formula II

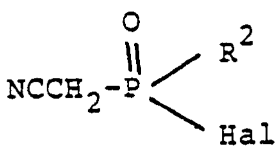

II

in which $R^2$ is a halogen having an atomic weight of 35 to 80 or $C_1$-$C_3$-alkyl and Hal is a halogen having an atomic weight of 35 to 80, with at least the stoichiometric amount of water.

2. The process as claimed in Claim 1, wherein Hal is chlorine.

3. The process as claimed in Claim 2, wherein cyanomethanephosphonyl dichloride or cyanomethylmethyl-phosphinyl chloride is used as the starting material.

4. The process as claimed in one or more of Claims 1 to 3, wherein the reaction is carried out at temperatures from -30° to +100° C, preferably from -5 to +50° C.

5. The process as claimed in one or more of Claims 1 to 4, wherein the water is used in an excess of up to twice the stoichiometric amount.

6. The process as claimed in one or more of Claims 1 to 5, wherein the water is employed in the form of an aqueous hydrogen halide acid, preferably hydrochloric acid.

7. The process as claimed in one or more of Claims 1 to 6, wherein at least one water-miscible solvent which is inert towards the reactants is also added to the reaction mixture.

8. The process as claimed in Claim 7, wherein the solvent is a low-molecular aliphatic carboxylic acid, preferably acetic acid.

9. The process as claimed in one or more of Claims 1, 2 and 4 to 8, wherein the alkyl is methyl.

**Revendications**

1. Procédé pour préparer l'acide aminocarbonyl-méthane-phosphonique et des acides alkyl-aminocarbonyl-méthyl-phosphiniques répondant à la formule générale I :

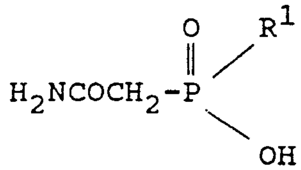

(I)

dans laquelle $R^1$ représente OH ou un alkyle en $C_1$-$C_3$, procédé caractérisé en ce qu'on fait réagir un dihalogénure de l'acide cyanométhane-phosphonique ou un halogénure d'acide alkyl-cyanométhyl-phosphinique répondant à la formule générale II :

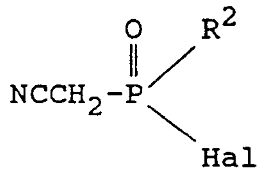

(II)

dans laquelle $R^2$ représente un halogène ayant une masse atomique de 35 à 80 ou un alkyle en $C_1$-$C_3$ et Hal représente un halogène ayant une masse atomique de 35 à 80, avec une quantité d'eau au moins égale à la quantité stoechiométrique.

2. Procédé selon la revendication 1 caractérisé en ce que Hal représente le chlore.

3. Procédé selon la revendication 2 caractérisé en ce qu'on utilise, comme corps de départ, le dichlorure de l'acide cyanométhane-phosphonique ou le chlorure de l'acide cyanométhyl-méthyl-phosphinique.

4. Procédé selon l'une quelconque des revendications 1 à 3, caractérisé en ce qu'on opère à des températures de -30 à +100 °C, de préférence de -5 à +50 °C.

5. Procédé selon l'une quelconque des revendications 1 à 4, caractérisé en ce qu'on utilise l'eau en un excès pouvant aller jusqu'à 2 fois la quantité stoechiométrique.

6. Procédé selon l'une quelconque des revendications 1 à 5, caractérisé en ce que l'eau est utilisée sous la forme d'un acide halogénhydrique aqueux, de préférence d'acide chlorhydrique.

7. Procédé selon l'une quelconque des revendications 1 à 6, caractérisé en ce qu'on ajoute en outre au mélange réactionnel au moins un solvant miscible à l'eau et inerte à l'égard des corps participant à la réaction.

8. Procédé selon la revendication 7 caractérisé en ce que le solvant est un acide carboxylique aliphatique à bas poids moléculaire, de préférence l'acide acétique.

9. Procédé selon l'une quelconque des revendications 1, 2 et 4 à 8, caractérisé en ce que l'alkyle est un méthyle.